# EUROPÄISCHE PATENTANMELDUNG

(11) **EP 0 867 997 A1**
(43) Veröffentlichungstag der Anmeldung: **30.09.1998**
(21) Anmeldenummer: 98400513.2
(22) Anmeldetag: 03.03.1998
(51) Int. Cl.: H02G 7/10, G02B 6/44

(54) **Verfahren zum Installieren eines Fernmeldekabels an einem Tragseil und Anordnung eines Fernmeldekabels an einem Tragseil**

(30) Priorität: 29.03.1997 DE 19713308
(71) Anmelder: ALCATEL ALSTHOM COMPAGNIE GENERALE D'ELECTRICITE, 75008 Paris (FR)
(72) Erfinder: Haag, Helmut, 52445 Titz (DE); Hög, Georg, 41066 Mönchengladbach (DE)
(74) Vertreter: Mende, Dirk

(57) **Zusammenfassung**

Die Erfindung betrifft ein Verfahren zum Installieren eines Fernmeldekabels (3) an einem Tragseil (1), insbesondere an einem Erd- oder Phasenseil einer Hochspannungsfreileitung, bei dem das Fernmeldekabel (3) entlang des Tragseils (1) aufgezogen und mit Hilfe von Befestigungselementen (5; 11; 13; 15) wellenförmig an diesem befestigt wird. Diese Anordnung ermöglicht einfach durchführbare Reparaturen von Tragseil (1) und Fernmeldekabel (3) (Fig. 1).

## Beschreibung

Die Erfindung betrifft ein Verfahren zum Installieren eines Fernmeldekabels an einem Tragseil, insbesondere an einem Erd- oder Phasenseil einer Hochspannungsfreileitung, bei dem das Fernmeldekabel entlang des Tragseils aufgezogen und an diesem mit Hilfe von Befestigungselementen befestigt wird, bzw. eine Anordnung eines Fernmeldekabels an einem Tragseil, insbesondere an einem Erd- oder Phasenseil einer Hochspannungsfreileitung, bei der das Fernmeldekabel entlang des Tragseils aufgezogen und an diesem mit Hilfe von Befestigungselementen befestigt ist.

Zum Installieren von Fernmeldekabeln an vorhandenen Tragseilen, insbesondere an Erd- oder Phasenseilen von Hochspannungsfreileitungen sind verschiedene Lösungen bekannt. So zeigt die EP 0 543 379 Al ein optisches Kabel, das spiralförmig um ein Phasenseil einer Hochspannungsfreileitung herumgewickelt ist. Nachteilig ist bei einer solchen Anordnung, daß im Schadensfall, beispielsweise bei Blitzschäden, das Phasenseil mit dem darum herumgewickelten optischen Kabel abgenommen werden muß, da das Phasenseil für Reparaturzwecke nicht befahrbar ist. Eine Reparatur des optischen Kabels ist nahezu unmöglich, da für Spleißzwecke keine ausreichende Reservelänge zur Verfügung steht. Darüber hinaus besteht die Gefahr, daß das aufgewickelte optische Kabel durch die Girlandenbildung jeweils zum tiefsten Punkt in einem Spannfeld wandert.

Aus der DE 195 19 773 A1 ist es bekannt, ein optisches Kabel mit Hilfe von Befestigungsmitteln an eine Hochspannungsfreileitung anzulaschen. Dabei verläuft das optische Kabel parallel zu dem Erd- oder Phasenseil der Hochspannungsfreileitung, so daß wegen der fehlenden Überlänge des optischen Kabels ebenfalls keine Reparatur des optischen Kabels z. B. nach einem Beschuß möglich ist. Zudem kommt es bei Eis- und Windlast zu einer höheren Belastung des aus Tragseil und optischem Kabel bestehenden Systems.

Die DE 195 20 382 A1 behandelt ein Verfahren zum Installieren eines optischen Kabels parallel zu einer vorhandenen Hochspannungsfreileitung mit Hilfe von zumindest einem aufgewendelten Klebeband.

Ausgehend von diesem Stand der Technik liegt der Erfindung das Problem zugrunde, ein Fernmeldekabel an einem vorhandenen Tragseil derart zu installieren, daß an dem Fernmeldekabel erforderliche Reparaturen auf einfache Art und Weise durchgeführt werden können und eine übermäßige Windlast des aus Tragseil und Fernmeldekabel bestehenden Systems vermieden ist.

Dieses Problem wird durch die Erfindung gelöst, indem das Fernmeldekabel wellenförmig an dem Tragseil befestigt wird.

Die durch die Erfindung erzielbaren Vorteile bestehen insbesondere darin, daß durch die wellenförmige Befestigung des Fernmeldekabels an dem Tragseil selbst bei einer vergleichsweise großen Wellenlänge eine deutliche Überlänge des Fernmeldekabels gegenüber dem Tragelement entsteht. Auf diese Weise wird eine Reparaturmöglichkeit für das Fernmeldekabel geschaffen, die das Heraustrennen eines beispielsweise durch Beschuß oder Blitzeinschlag beschädigten Abschnitts des Fernmeldekabels und die anschließende Herstellung einer Spleißverbindung erlaubt. Zudem kann das aus Fernmeldekabel und Tragseil bestehende System befahren werden, so daß im Schadensfall eine Reparatur des Tragelements möglich ist, ohne das Tragelement von den Masten abzunehmen. Die erfindungsgemäße Installation des Fernmeldekabels ist darüber hinaus vergleichsweise einfach und kostengünstig durchführbar. Außerdem wird durch das wellenförmig an dem Tragseil angebrachte Fernmeldekabel eine Dämpfung der durch Windanregung hervorgerufenen Schwingungen des Tragseils erreicht. Unter wellenförmig ist dabei auch eine mäander- oder ceanderförmige Anbringung des Fernmeldekabels zu verstehen, die ausdrücklich in den Schutzumfang miteingeschlossen sein soll.

Durch die in den Unteransprüchen aufgeführten Merkmale sind vorteilhafte Weiterbildungen und Verbesserungen der Erfindung möglich.

Für eine besonders einfache und sichere Befestigung des Fernmeldekabels an dem Tragseil ist es von Vorteil, wenn das Fernmeldekabel mit Hilfe von Klemmen an dem Tragseil befestigt wird.

Aus dem gleichen Grund ist es ebenfalls von Vorteil, wenn das Fernmeldekabel mit Hilfe zumindest eines Bandes oder zumindest eines Bindedrahtes an dem Tragseil befestigt wird. Eine derartige Befestigung des Fernmeldekabels läßt sich zudem sehr einfach und kostengünstig kontinuierlich herstellen.

Drei Ausführungsbeispiele der Erfindung sind in der Zeichnung vereinfacht dargestellt und in der nachfolgenden Beschreibung näher erläutert. Es zeigen die Fig. 1 ein erstes, die Fig. 2 ein zweites und die Fig. 3 ein drittes Ausführungsbeispiel einer erfindungsgemäßen Anordnung eines Fernmeldekabels an einem Tragseil.

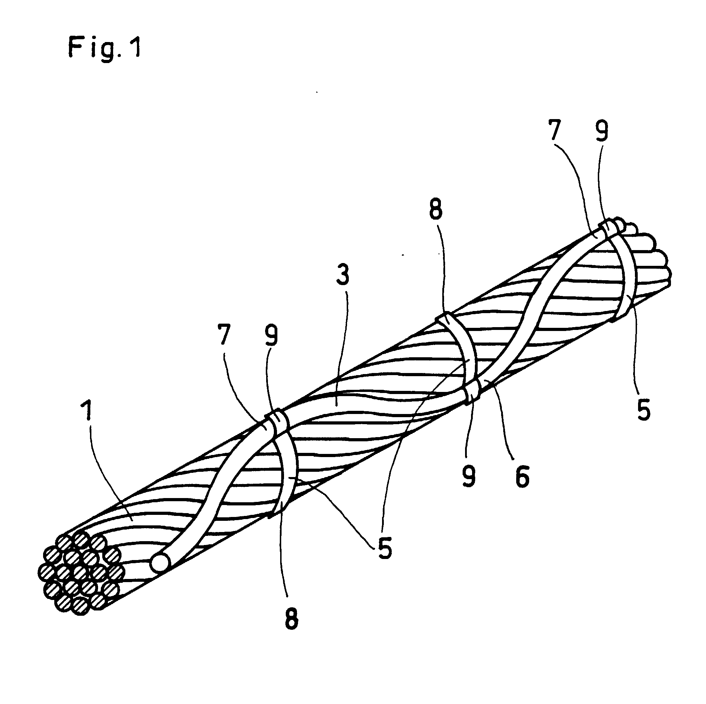

In den Fig. 1 bis 3 ist beispielhaft ein als Tragseil 1 dienendes Erd- oder Phasenseil einer Hochspannungsfreileitung dargestellt. An diesem Tragseil 1 ist ein Fernmeldekabel 3, beispielsweise ein eine Mehrzahl von optischen Fasern aufweisendes optisches Kabel derart fixiert, daß das Fernmeldekabel 3 wellenförmig unmittelbar an dem Umfang des Tragseils anliegt. Dabei gewährleistet auch eine große Wellenlänge des wellenförmig verlaufenden Fernmeldekabels 3 eine ausreichende Überlänge des Fernmeldekabels gegenüber dem Tragseil 1, so daß Reparaturen des Fernmeldekabels, die beispielsweise nach einem Beschuß oder Blitzeinschlag erforderlich sind, problemlos durchgeführt werden können. In Abhängigkeit von der Größe der gewünschten Überlänge und der Gesamtlänge des Spannfeldes kann neben der Wellenlänge auch die Amplitude des wellenförmig befestigten Fernmeldekabels 3 variiert werden. Es ist im Extremfall sogar denkbar, daß das Fernmeldekabel im Bereich der Wellentäler bzw. Wellenberge vollständig um den Umfang des Tragseils 1 herumgelegt ist. Unter einem wellenförmigen Verlauf ist auch ein mäander- oder ceanderförmiger Verlauf des Fernmeldekabels 3 zu verstehen. Im Gegensatz zu den Ausführungsbeispielen ist es ebenfalls möglich, daß das Fernmeldekabel 3 in einer unregelmäßigen Wellenform mit Überlänge an dem Tragseil 1 anliegt.

Bei dem in der Fig. 1 dargestellten ersten Ausführungsbeispiel ist das Fernmeldekabel 3 mit Hilfe von Klemmen 5 beispielsweise an seinen Wellentälern 6 bzw. Wellenbergen 7 wellenförmig an dem Tragseil 1 befestigt. Bei den Klemmen 5 kann es sich um übliche Klammern zum Anlaschen von Fernmeldekabeln an Tragseile handeln, die jeweils einen das Tragseil 1 umgreifenden und mit einem nicht dargestellten Schlitz versehenen ringförmigen Abschnitt 8 sowie eine Aussparung 9 zum Einrasten des Fernmeldekabels 3 aufweisen.

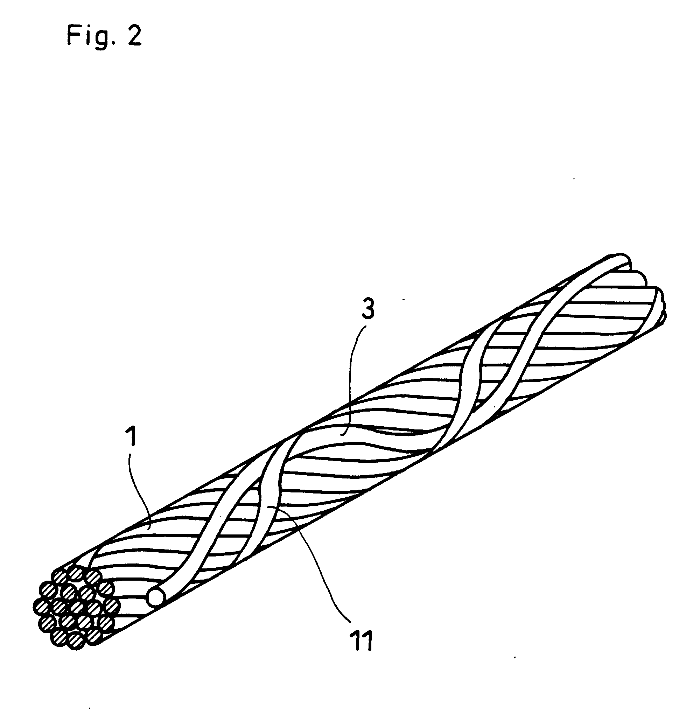

Bei dem in der Fig. 2 dargestellten Ausführungsbeispiel ist das Fernmeldekabel 3 mit Hilfe eines um das Fernmeldekabel und das Tragseil 1 wendelförmig herumgewickelten Bandes 11 wellenförmig an dem Tragseil fixiert. Für einen besseren Halt des Bandes 11 an dem Fernmeldekabel 3 und dem Tragseil 1 ist es dabei vorteilhaft, wenn das Band 11 an seiner Innenseite mit einem Klebemittel beschichtet ist. Es ist ebenfalls möglich, zusätzlich ein zweites Band vorzusehen, das im Gegenschlag zu dem ersten Band 11 auf Tragseil 1 und Fernmeldekabel 3 wendelförmig aufgebracht ist und so den Halt des Fernmeldekabels 3 an dem Tragseil 1 weiter verbessert.

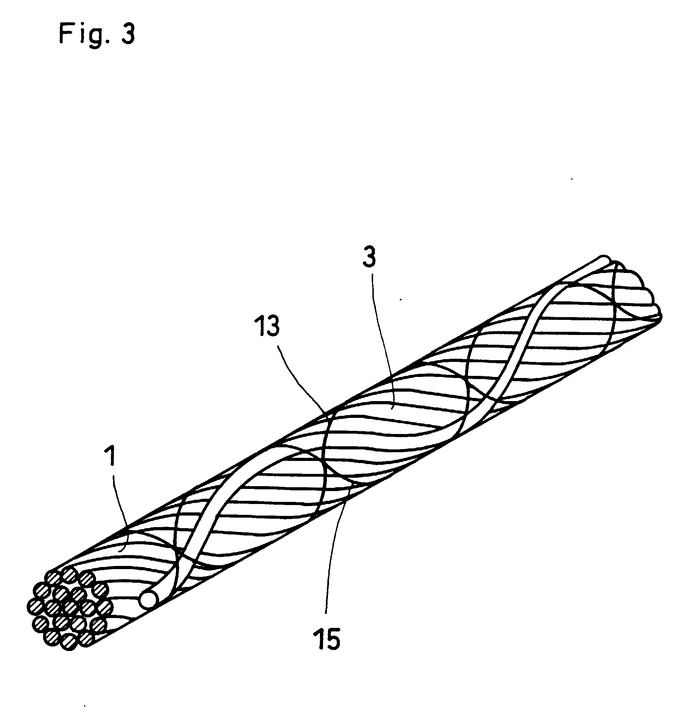

Bei dem in der Fig. 3 dargestellten dritten Ausführungsbeispiel sind zwei Bindedrähte 13 und 15 zum wellenförmigen Befestigen des Fernmeldekabels 3 an dem Tragseil 1 vorgesehen. Der erste Bindedraht 13 ist dabei wendelförmig auf das aus Fernmeldekabel 3 und Tragseil 1 gebildete System aufgebracht. Zusätzlich ist zur sichereren Fixierung des Fernmeldekabels 3 am Tragseil 1 beispielsweise ein weiterer Bindedraht 15 mit entgegengesetzter Schlagrichtung wendelförmig auf Tragseil und Fernmeldekabel aufgebracht.

## Patentansprüche

1. Verfahren zum Installieren eines Fernmeldekabels an einem Tragseil, insbesondere an einem Erd- oder Phasenseil einer Hochspannungsfreileitung, bei dem das Fernmeldekabel entlang des Tragseils aufgezogen und an diesem mit Hilfe von Befestigungselementen befestigt wird, dadurch gekennzeichnet, daß das Fernmeldekabel (3) wellenförmig an dem Tragseil (1) befestigt wird.

2. Verfahren nach Anspruch 1, dadurch gekennzeichnet, daß das Fernmeldekabel (3) mit Hilfe von Klemmen (5) an dem Tragseil (1) befestigt wird.

3. Verfahren nach Anspruch 1, dadurch gekennzeichnet, daß das Fernmeldekabel (3) mit Hilfe zumindest eines Bandes (11) an dem Tragseil (1) befestigt wird.

4. Verfahren nach Anspruch 1, dadurch gekennzeichnet. daß das Fernmeldekabel (3) mit Hilfe zumindest eines Bindedrahtes (13; 15) an dem Tragseil (1) befestigt wird.

5. Anordnung eines Fernmeldekabels an einem Tragseil, insbesondere an einem Erd- oder Phasenseil einer Hochspannungsfreileitung, bei der das Fernmeldekabel entlang des Tragseils aufgezogen und an diesem mit Hilfe von Befestigungselementen befestigt ist, dadurch gekennzeichnet, daß das Fernmeldekabel (3) wellenförmig an dem Tragseil (1) befestigt ist.

6. Anordnung nach Anspruch 5, dadurch gekennzeichnet, daß das Fernmeldekabel (3) mit Hilfe von Klemmen (5) an dem Tragseil (1) befestigt ist.

7. Anordnung nach Anspruch 5, dadurch gekennzeichnet, daß das Fernmeldekabel (3) mit Hilfe zumindest eines Bandes (11) an dem Tragseil (1) befestigt ist.

8. Anordnung nach Anspruch 5, dadurch gekennzeichnet, daß das Fernmeldekabel (3) mit Hilfe zumindest eines Bindedrahtes (13; 15) an dem Tragseil (1) befestigt ist.
